(19) Europäisches Patentamt
European Patent Office
Office européen des brevets

(11) Veröffentlichungsnummer: **0 231 442**
**A2**

(12) **EUROPÄISCHE PATENTANMELDUNG**

(21) Anmeldenummer: **86115266.8**

(22) Anmeldetag: **04.11.86**

(51) Int.Cl.[3]: **C 08 F 8/32**
C 08 L 63/10, C 08 G 18/83

(30) Priorität: **14.11.85 DE 3540464**

(43) Veröffentlichungstag der Anmeldung:
**12.08.87 Patentblatt 87/33**

(84) Benannte Vertragsstaaten:
**AT CH DE ES LI**

(71) Anmelder: **PCI Polychemie GmbH Augsburg**
**Piccardstrasse 10**
**D-8900 Augsburg 1(DE)**

(72) Erfinder: **Psader, Josef**
**Johann-Sebastian-Bach-Strasse 12**
**D-8901 Neusäss(DE)**

(72) Erfinder: **Huber, Manfred**
**Donauwörther Strasse 4**
**D-8901 Königsbrunn(DE)**

(72) Erfinder: **Reisch, Bruno**
**Katharinengasse 24**
**D-8900 Augsburg(DE)**

(74) Vertreter: **Hansen, Bernd, Dr.rer.nat. et al,**
**Hoffmann, Eitle & Partner Patentanwälte Arabellastrasse 4**
**D-8000 München 81(DE)**

(54) **Reaktive Bindemittel.**

(57) Die Erfindung betrifft die Verwendung von

(a) aktivierte Doppelbindungen enthaltenden Verbindungen aus der Gruppe Epoxy(meth)acrylat, Polyester(meth)acrylat, Polyester/Urethan(meth)acrylat, Polyether(meth)acrylat und ungesättigtem Polyester mit

(b) Polyaminen mit wenigstens zwei primären oder sekundären Aminogruppen, wobei das Mengenverhältnis von (a) zu (b) im wesentlichen stöchiometrisch ist, zur Herstellung von härtenden Bindemitteln, Imprägniermitteln, Beschichtungsmitteln oder als reaktive Modifizierungsmittel für aminreaktive Polymersysteme.

EP 0 231 442 A2

## Reaktive Bindemittel

Imprägnierungen, Versiegelungen und Beschichtungen auf Methacrylatbasis, die mit Peroxiden gehärtet werden, sind seit langem bekannt und vor allem wegen ihrer hohen Reaktionsgeschwindigkeit sowie der Tieftemperaturhärtung beliebt. Nachteil ist die hohe Flüchtigkeit des Monomers, so daß sich derartige Anwendungen bei starker Sonneneinstrahlung oder starkem Wind ausschließen. Die Flüchtigkeit des Monomers führt natürlich auch zu Geruchsbelästigungen während der Applikation. Ein weiterer Nachteil der peroxidgehärteten Methacrylatsysteme ist die kurze Verarbeitungszeit von 10 bis 20 Minuten. Diese kann auch nicht wesentlich verlängert werden, da das Material ansonsten nicht durchhärtet und vor allem bei dünnen Schichten klebrig bleibt. Beschichtungen auf Methacrylatbasis sind außerdem hart und spröde. Vor allem bei Sanierungsarbeiten auf leicht rissigen oder rissegefährdeten Untergründen ist dies von Nachteil.

Es hat daher nicht an Versuchen gefehlt, hartflexible und geruchsarme Beschichtungen auf Methacrylatbasis zu formulieren. Dazu hat man Copolymere des Methylmethacrylats mit längerkettigen Methacrylsäureestern verwendet. Auf diese Weise werden bei geringerer Geruchsbelästigung während der Applikation zwar flexiblere Beschichtungen erhalten, die aber an der Oberfläche klebrig bleiben. Das bekannte Problem der Polymerisationsinhibierung durch Luftsauerstoff, sowohl in den Poren von porösen Untergründen - was zu Haftungsproblemen führt - als auch an der Oberfläche tritt bei so modifizierten Methacrylatsystemen trotz Paraffinzusatz zum Ausschluß von Luftsauerstoff in verstärktem Maße auf.

Ebenso muß bei diesem System die kurze Verarbeitungszeit von nur 10 bis 20 Minuten beibehalten werden. Die chemische Beständigkeit derartiger Beschichtungen ist außerdem deutlich schlechter als bei herkömmlichen Methacrylatsystemen.

Daher wird eine nachträgliche Versiegelung mit unmodifiziertem Methylmethacrylharz empfohlen, was einen zusätzlichen Arbeitsgang erforderlich macht.

Ein geruchsarmes Methacrylatsystem auf der Basis von Dipentenyloxyethylmethacrylat ist bekannt. Der kommerzielle Einsatz dieses Produktes scheitert allerdings an dem gegenüber herkömmlichen Methacrylatharzen mehrfach höheren Preis. Selbst gegenüber Epoxidharzen liegt der Preis noch wesentlich höher.

Eine weitere Möglichkeit der Flexibilisierung kann man durch urethanmodifizierte Methylmethacrylatharze erzielen. Man erhält dabei zwar flexiblere und klebfreie Beschichtungen, muß aber den Nachteil in Kauf nehmen, daß der Verarbeiter vor Ort mit drei Komponenten hantieren muß, nämlich Füllstoffen, isocyanathaltigem Methacrylatharz und Initiator.

Eine der Komponenten, das urethanmodifizierte Methylmethacrylatharz, ist zudem physiologisch bedenklich und muß vor Feuchtigkeit geschützt aufbewahrt werden.

Aufgabe der Erfindung ist es, neue reaktive Bindemittel zur Verfügung zu stellen, die leicht und in vielfachen Modifikationen hergestellt werden können und als solche als Bindemittel, für Imprägnierungen, Versiegelungen, Beschichtungen oder als reaktive Modifizierungsmittel für aminreaktive Polymersysteme verwendet werden können.

Diese Aufgabe wird durch die Verwendung gemäß Anspruch 1 gelöst.

Durch die Auswahl der Komponenten (a) und (b) können die physikalischen und chemischen Eigenschaften der daraus erhaltenen Produkte in weiten Grenzen variiert werden.

Aktivierte Doppelbindungen enthaltende Verbindungen sind im Sinne der Erfindung Epoxy(meth)acrylate, Polyester(meth)acrylate, Polyester/Urethan(meth)acrylate, Polyether(meth)acrylate und ungesättigte Polyester. Solche Verbindungen sind also

beispielsweise: Das Umsetzungsprodukt eines Epoxidharzes auf Basis Bisphenol A mit (Meth)-acrylsäure, wobei diese Umsetzung ganz oder teilweise erfolgen kann, so daß noch gegebenenfalls freie Epoxygruppen in dem Umsetzungsprodukt enthalten sind. Als Polyester(meth)acrylat kommt beispielsweise das Umsetzungsprodukt aus Hexandiol, Adipinsäure und Hydroxypropylmethacrylat in Frage. Ein Polyester/Urethan(meth)acrylat ist beispielsweise ein Produkt, das sich aus Butandiol, Adipinsäure, Toluylendiisocyanat und Hydroxyethylmethacrylat aufbaut. Ein Polyether(meth)acrylat erhält man beispielsweise durch Umsetzen von Polyethylen-, oder Polypropylenoxid mit (Meth)acrylsäure. Ungesättigte Polyester sind solche Verbindungen, wie sie dem Fachmann für die Herstellung von ungesättigten Polyesterharzen bekannt sind, beispielsweise das Umsetzungsprodukt aus Maleinsäureanhydrid mit einem Diol, z.B. Butandiol.

Diese aktivierte Doppelbindungen enthaltenden Verbindungen können mit Radikalfängern entsprechend stabilisiert werden. Geeignete Stabilisierungsmittel sind beispielsweise Radikalfänger wie Hydrochinon oder Hydrochinonmonomethylether. Diese Stabilisatoren stören auch bei der späteren Härtung mit Polyaminverbindungen nicht.

Die Komponente (b), das Polyamin, ist eine Verbindung, die wenigstens zwei primäre oder sekundäre Aminogruppen enthält. Solche Polyamine sind dem Fachmann bei der Verwendung mit Epoxidharzen bekannt. Sie werden unter anderem in Houben-Weyl, "Methoden der organischen Chemie Makromolekulare Stoffe 2", 4. Aufl., Bd. 14/2, Seiten 516 bis 523

und H. Kittel, "Lehrbuch der Lacke und Beschichtungen", Bd. 1, Teil 2, Seiten 664 bis 668 beschrieben.

Geeignete Polyamine sind somit beispielsweise: Diethylentriamin, Isophorondiamin und Trimethylhexamethylendiamin.

Das Mengenverhältnis der Komponente (a) zu der Komponente (b) ist durch die Stöchiometrie grundsätzlich vorgegeben. Dies bedeutet nicht, daß eine vollständige stöchiometrische Umsetzung erfolgen muß oder angestrebt wird. Die Mengenverhältnisse können deshalb so gewählt werden, daß nur ein Teil der jeweiligen Reaktivität bzw. Aktivität in den Komponenten (a) und (b) für die Umsetzung zwischen diesen Komponenten verbraucht wird. Dies wird im Anspruch 1 als "im wesentlichen stöchiometrisch" bezeichnet.

Das reaktive, mit Polyaminen härtende Bindemittel wird vorzugsweise in einer Menge von 2 bis 70 Gew.-%, bezogen auf das gesamte aminreaktive Polymersystem, angewendet.

Um bei dem erfindungsgemäßen Bindemittelsystem zu räumlich vernetzten Polymergerüsten zu kommen, wird einer der beiden hauptsächlichen Reaktionspartner (a) und (b) in einer Funktionalität größer 2 gewählt, wobei der andere mindestens eine Funktionalität von 2 aufweisen muß. Schematisiert laufen am Beispiel eines Epoxymethacrylats mit Diethylentriamin als Härter folgende Reaktionen ab:

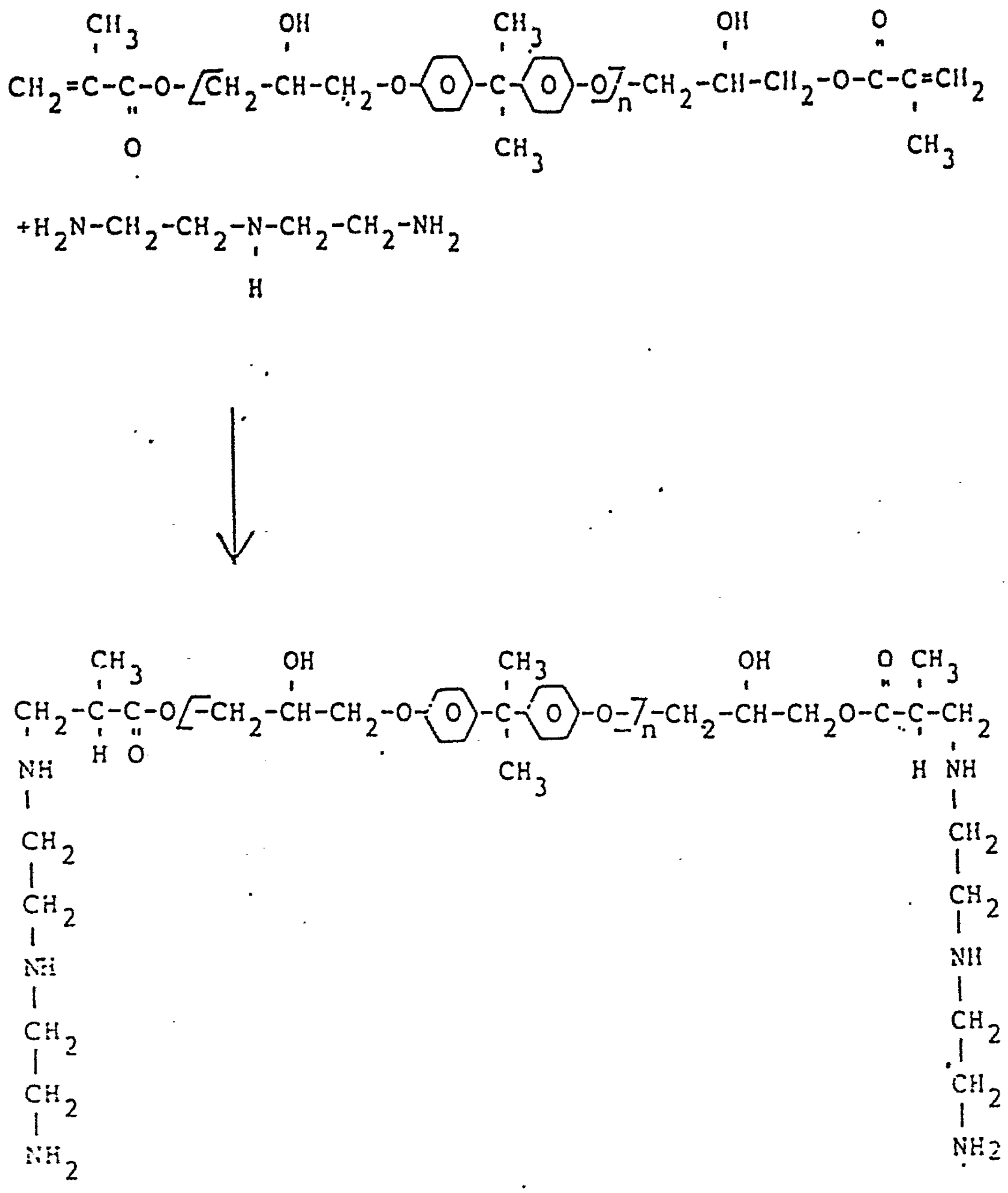

n = 1 - 10

In den nachfolgenden Beispielen wird die Verwendung der aktivierte Doppelbindungen enthaltenden Verbindungen für Imprägnierungen, Versiegelungen oder Beschichtungen gezeigt.

Die Mengenangaben in den Beispielen sind jeweils Gewichtsteile.

Beispiel 1

Komp. I 50,0 Teile Polyester/Urethan(meth)acrylat, aufgebaut aus Butandiol, Adipinsäure, Toluylendiisocyanat und Hydroxyethylmethacrylat, MG ca. 650

50,0 Teile

Komp. II 9,0 Teile Xylylendiamin

Beide Komponenten werden miteinander gründlich vermischt. Man erhält eine lösungsmittelfreie Versiegelung mit einer Verarbeitungszeit von 12 Minuten, die innerhalb von 8 Stunden bei Raumtemperatur aushärtet und Filme hoher Härte und Kratzfestigkeit ergibt und eine gute Beständigkeit gegen Lösungsmittel zeigt.

Beispiel 2

| | | | |
|---|---|---|---|
| Komp. I | 50,0 | Teile | Epoxyacrylat der Formel A |
| | 30,0 | Teile | Schwerspat |
| | 30,0 | Teile | Quarzmehl, |
| | 30,0 | Teile | Quarzsand |
| | 140,0 | Teile | |

Komp. II 9,0 Teile Xylylendiamin

Man erhält eine selbstverlaufende Beschichtungsmasse. Die Topfzeit beträgt ca. 35 Minuten. Die ausgehärtete Beschichtung weist eine zäh-harte und kratzfeste Oberfläche auf und ist besonders für leicht rissige bzw. rissegefährdete Untergründe geeignet.

Dieses Beispiel zeigt, daß man zu den erfindungsgemäß verwendeten Bindemitteln übliche Füllstoffe, im vorliegenden Falle Schwerspat, Quarzmehl und Quarzsand hinzufügen kann.

Im allgemeinen können bis zu etwa 120 Gew.-% an Füllstoffen sowie üblichen Additiven, wie Farbstoffe etc. zugegeben werden.

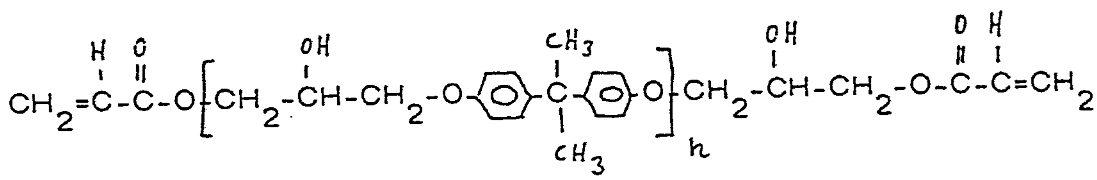

(A)

n = 1-2

Beispiel 3

| | | | |
|---|---|---|---|
| Komp. I | 50,0 | Teile | Polyestermethacrylat, aufgebaut aus Hexandiol, Adipinsäure und Hydroxypropylmethacrylat, MG ca.500 |
| | 30,0 | Teile | Schwerspat |
| | 30,0 | Teile | Quarzmehl |
| | 30,0 | Teile | Quarzsand |
| | 140,0 | Teile | |
| Komp. II | 20,0 | Teile | modifizierter aliphatischer Polyaminhärter (mit einem H-Äquivalentgewicht von 95 g/Mol) |
| | 15,0 | Teile | modifizierter aliphatischer Polyaminhärter (mit einem H-Äquivalentgewicht von 135 g/Mol) |
| | 35,0 | Teile | |

Nach dem Mischen der Komponenten I und II erhält man eine Fugenvergußmasse mit einer Verarbeitungszeit von 20 bis 25 Minuten. Das ausgehärtete Material ist stramm-elastisch und für befahrbare Fugen geeignet.

Aus dem Stand der Technik sind Bindemittel mit verkappten Isocyanatgruppen, die mit mehrfunktionellen Aminen, z.B. Isophorondiamin oder mit Trimethylhexamethylendiamin gehärtet werden können, bekannt. Solche Produkte finden beispielsweise als Bindemittel für Dachbeschichtungen, für dauerelastische Dichtungsmassen, auch in Verbindung mit Teer, sowie zum Elastifizieren von Epoxidharzen,

Verwendung. Diese bekannten Bindemittel mit verkappten Isocyanatgruppen haben den Vorteil, daß sie gegenüber Feuchtigkeit unempfindlich sind und sich für den jeweiligen Anwendungszweck genau rezeptieren lassen. Ein Nachteil ist aber in der verhältnismäßig hohen Viskosität (ca. 80 000 mPas) zu sehen, so daß man für diese Produkte Weichmacher benötigt, und zwar in verhältnismäßig großer Menge bis zu 30 Gew.-%. Gibt man dann noch Füllstoffe hinzu, müssen zusätzliche Mengen an Weichmacher verwendet werden, um die Füllstoffe aufzunehmen. Bei der Verwendung von Weichmachern besteht aber immer die Gefahr, daß der Weichmacher im Laufe der Zeit auswandert, daß sich die Chemikalienbeständigkeit der Beschichtungen etc. verschlechtert und auch, daß die Härte erniedrigt wird. Auch die Oberflächeneigenschaften sind häufig unbefriedigend, weil sie klebrig sind. Weiterhin wurde schon vorgeschlagen, daß man Verbindungen mit aktivierten Doppelbindungen, z.B. Acrylsäure- oder Methacrylsäureester oder Vinylester als reaktive Verdünner für Epoxidharze verwenden kann. Diese werden dann über eine Michael-Addition mit den als Härter verwendeten Polyaminen/Polyaminoamiden in das Polymergerüst eingebaut.

Überraschenderweise wurde nun gefunden, daß sich die Kombination aus (a) und (b) auch als reaktive Modifizierungsmittel in aminreaktiven Polymersystemen eignen. Über die zur Härtung verwendete Polyaminverbindung wird der reaktive Verdünner in das Polymergerüst eingebaut.

Unter aminreaktiven Polymersystemen werden im Sinne der vorliegenden Erfindung solche Systeme

verstanden, bei denen die Polymeren reaktionsfähige Gruppen enthalten, welche mit dem aktiven Wasserstoff eines Amins zu reagieren in der Lage sind. Solche aminreaktiven Polymersysteme sind insbesondere Epoxidharzsysteme, von denen ja bekannt ist, daß sie mit Aminen härten. Dazu gehören weiterhin auch beispielsweise Polymersysteme mit verkappten Isocyanatgruppen, bei denen man mit der Kombination aus (a) und (b) die gewünschte Modifizierung durchführen kann und man auf diese Weise den Zusatz von Weichmachern vermeidet.

Am Beispiel von Toluylendiisocyanat mit verkappten Isocyanatgruppen findet unter Verwendung von Triethylentetramin als Härter und Maleinsäuredibutylester folgende Reaktion statt:

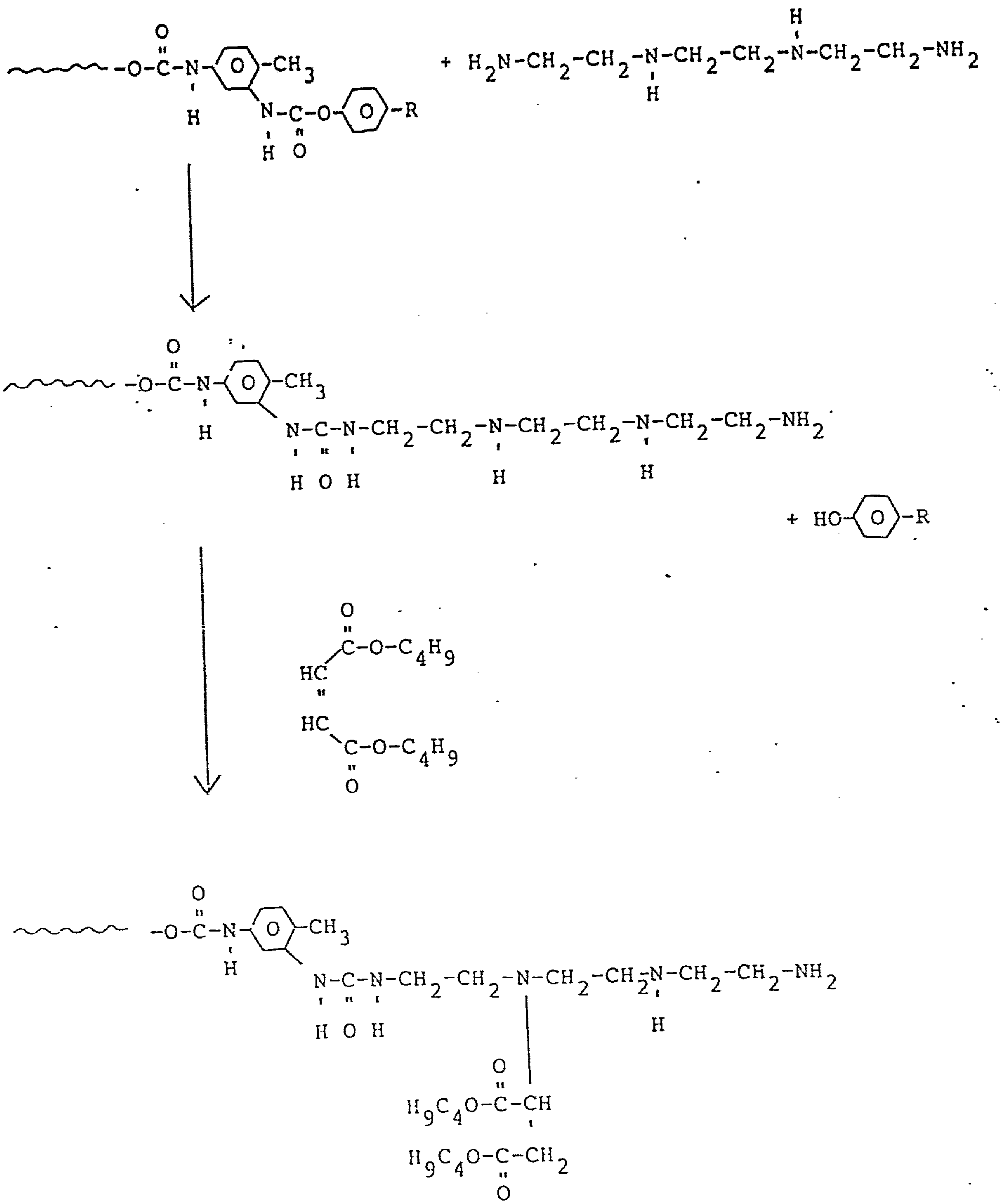

usw.

= Prepolymergerüst

 0231442

Durch den Einbau des reaktiven Modifizierungsmittels in das Polymergerüst ist eine Auswanderung desselben ausgeschlossen, die Chemikalienbeständigkeit und die Shore-A-Härte kann selbst bei hohen Anteilen des Modifizierungsmittels im erwünschten Bereich (20 bis 40) gehalten werden. Durch die Auswahl des reaktiven Modifizierungsmittels ist eine gewisse Steuerung der Shore-A-Härte möglich. Außerdem neigen so formulierte Produkte weniger zum Kleben.

Die Erfindung ermöglicht also die Herstellung von hochgefüllten Formulierungen für Fugendichtungsmassen, Dachbeschichtungen etc. mit guten mechanischen und chemischen Eigenschaften. Dies führt zu wirtschaftlichen Vorteilen, einmal dadurch, daß die Systeme höher gefüllt werden können und zum anderen dadurch, daß die erfindungsgemäß verwendeten reaktiven Modifizierungsmittel preiswert zur Verfügung stehen.

Wie an dem vorher gezeigten Beispiel der Umsetzung von Toluylendiisocyanat mit verkappten Isocyanatgruppen unter Verwendung von Triethylentetramin als Härter und von Maleinsäuredibutylester schon gezeigt wurde, kann eine weitere Komponente mitverwendet werden. Diese weitere Komponente kann ein mono- oder mehrfunktioneller alpha,beta-ungesättigter Aldehyd, Keton, Carbonsäureester, Vinylester, Maleinsäureester, Fumarsäureester oder Acrylnitril sein. Diese weiteren Verbindungen werden, im Falle ihres Einsatzes, zusätzlich zu den Komponenten (a) und (b) verwendet, wodurch eine weitere Modifizierung und Flexibilisierung

für die vorgesehenen Anwendungsgebiete ermöglicht wird.

Geeignete alpha,beta-ungesättigte Aldehyde sind beispielsweise Acrolein und Crotonaldehyd. Ein geeignetes alpha,beta-ungesättigtes Keton ist beispielsweise Isophoron. Als Carbonsäureester kommt beispielsweise ein Acrylsäure- oder Methacrylsäure-Alkylester in Frage. Geeignete Vinylester sind Vinylacetat und Vinylpropionat. Als Maleinsäure- oder Fumarsäureester können Maleinsäuredibutylester und Fumarsäuredihexylester genannt werden.

Beispiel 4

| | | |
|---|---|---|
| Komp. I | 75,0 | Teile Phenolblockiertes Isocyanat-prepolymer |
| | 25,0 | Teile Benzylbutylphthalat |
| | 4,0 | Teile Toluol |
| | 9,1 | Teile Maleinsäuredibutylester |
| | 1,2 | Teile Butylacrylat/Vinylisobutylether-Copolymerisat |
| | 85,0 | Teile China Clay |
| | 28,0 | Teile Bariumsulfat |
| | 4,0 | Teile Talkum |
| | 231,3 | Teile |
| Komp. II | 3,8 | Teile Triethylentetramin |
| | 2,0 | Teile Katalysator (ortho-Toluylbiguanid) |
| | 75,0 | Teile lösungsmittelfreier Teer (Viskosität 2000 mPa·s) |
| | 7,5 | Teile Toluol |
| | 88,3 | Teile |

Die gießfähige Fugendichtungsmasse hat eine Verarbeitungszeit von ca. 1 Stunde, eine Shore-A-Härte von 15 bis 20 im ausgehärteten Zustand und eine sehr hohe Dehnfähigkeit und Kerbzähigkeit. Aufgrund der Teermodifizierung ist sie für Dehnungsfugen im Tiefbau geeignet. Ein vergleichbarer Ansatz ohne die Mitverwendung des reaktiven Verdünners Maleinsäuredibutylester ist nicht gießfähig, weist eine Shore-A-Härte von 30 bis 35 auf und ist klebrig an der Oberfläche.

Beispiel 5

| | | |
|---|---|---|
| Komp. I | 75,0 | Teile Phenolblockiertes Isocyanatprepolymer |
| | 20,0 | Teile Benzylbutylphthalat |
| | 9,1 | Teile Epoxyacrylat aus Beispiel 2 |
| | 1,2 | Teile Butylacrylat/Vinylisobutylether-Copolymerisat |
| | 2,0 | Teile Polyacrylsäurebutylester |
| | 1,0 | Teile epoxyfunktionelles Trimethoxysilan (Haftvermittler) |
| | 92,0 | Teile China Clay |
| | 15,1 | Teile Cumaron-Inden-Harz (Molekulargewicht ca. 1000) |
| | 5,0 | Teile Talkum |
| | 8,0 | Teile hydrophobe Kieselsäure |
| | 228,4 | Teile |
| Komp. II | 3,2 | Teile Diethylentriamin |
| | 1,5 | Teile Katalysator (ortho-Toluylbiguanid) |
| | 30,0 | Teile Cumaron-Inden-Harz mit einem |

Molekulargewicht von ca. 1000

34,7 Teile

Die standfeste Fugendichtungsmasse hat eine Verarbeitungszeit von 1,5 Stunden. Die Shore-A-Härte beträg 30. Dehnfähigkeit und Rückstellvermögen sind hervorragend. Sie kann für Dehnungsfugen im Hochbau eingesetzt werden.

Ein vergleichbarer Ansatz ohne das reaktive Modifizierungsmittel Epoxyacrylat weist eine so feste Konsistenz auf, daß das Material nicht mehr spritzbar ist. Die Shore-A-Härte eines solchen Materials beträgt ca. 50.

0231442

Patentansprüche:

1. Verwendung von
(a) aktivierte Doppelbindungen enthaltenden Verbindungen aus der Gruppe Epoxy(meth)acrylat, Polyester(meth)acrylat, Polyester/Urethan(meth)-acrylat, Polyether(meth)acrylat und ungesättigtem Polyester mit
(b) Polyaminen mit wenigstens zwei primären oder sekundären Aminogruppen, wobei das Mengenverhältnis von (a) zu (b) im wesentlichen stöchiometrisch ist, zur Herstellung von härtenden Bindemitteln, Imprägniermitteln, Beschichtungsmitteln oder als reaktive Modifizierungsmittel für aminreaktive Polymersysteme.

2. Verwendung gemäß Anspruch 1, dadurch gekennzeichnet, daß zusätzlich mono- oder mehrfunktionelle alpha,beta-ungesättigte Aldehyde, Ketone, Carbonsäureester, Vinylester, Maleinsäureester, Fumarsäureester oder Acrylnitril neben den Komponenten (a) und (b) verwendet werden.

3. Verwendung gemäß Anspruch 1, dadurch gekennzeichnet, daß das aminreaktive Polymersystem ein übliches Epoxidharzsystem ist.

4. Verwendung nach Anspruch 1, dadurch gekennzeichnet, daß man das reaktive, mit Polyamin härtende Bindemittel in einer Menge von 2 bis 70 Gew.-%, bezogen auf das gesamte Polymersystem, anwendet.

5. Verwendung gemäß Anspruch 1, dadurch gekennzeichnet, daß zur Stabilisierung der aktivierte Doppelbindungen enthaltenden Verbindungen Radikalfänger verwendet werden.

6. Verwendung gemäß Anspruch 5, dadurch gekennzeichnet, daß der Radikalfänger Hydrochinon oder Hydrochinonmonomethylether ist.